(19) Europäisches Patentamt
European Patent Office
Office européen des brevets

(11) **EP 2 960 706 B1**

(12) **EUROPÄISCHE PATENTSCHRIFT**

(45) Veröffentlichungstag und Bekanntmachung des Hinweises auf die Patenterteilung:
**24.08.2022 Patentblatt 2022/34**

(21) Anmeldenummer: **15172226.1**

(22) Anmeldetag: **16.06.2015**

(51) Internationale Patentklassifikation (IPC):
***G02B 21/08*** *(2006.01)*    ***G02B 21/12*** *(2006.01)*

(52) Gemeinsame Patentklassifikation (CPC):
**G02B 21/082; G02B 21/125**

(54) **BELEUCHTUNGSVORRICHTUNG FÜR EIN OPTISCHES BEOBACHTUNGSGERÄT**

ILLUMINATING DEVICE FOR AN OPTICAL OBSERVATION UNIT

DISPOSITIF D'ÉCLAIRAGE POUR UN APPAREIL D'OBSERVATION OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2014 DE 102014212373**

(43) Veröffentlichungstag der Anmeldung:
**30.12.2015 Patentblatt 2015/53**

(73) Patentinhaber: **Carl Zeiss Meditec AG**
**07745 Jena (DE)**

(72) Erfinder:
• **Reimer, Peter**
  **73479 Ellwangen (DE)**
• **Kolster, Daniel**
  **73447 Oberkochen (DE)**
• **Merz, Franz**
  **73433 Aalen (DE)**
• **Meinkuß, Stefan**
  **89564 Nattheim (DE)**

(74) Vertreter: **Carl Zeiss AG - Patentabteilung**
**Carl-Zeiss-Straße 22**
**73447 Oberkochen (DE)**

(56) Entgegenhaltungen:
DE-A1- 19 856 847    JP-A- 2005 010 296
JP-A- 2008 139 820    US-A1- 2010 302 630
US-A1- 2012 057 013

EP 2 960 706 B1

**Beschreibung**

Die Erfindung betrifft eine Beleuchtungsvorrichtung für ein optisches Beobachtungsgerät, die eine Lichtquelle, umfassend eine erste Einzellichtquelle und eine zweite Einzellichtquelle, die in einer Lichtquellenebene angeordnet sind, aufweist. Die erste Einzellichtquelle weist einen ersten Mittelpunkt M1 und die zweite Einzellichtquelle einen zweiten Mittelpunkt M2 auf. Eine erste Achsrichtung A1 ist durch einen Vektor von dem zweiten Mittelpunkt M2 zu dem ersten Mittelpunkt M1 definiert. Durch eine Beleuchtungsoptik ist eine optische Achse Z definiert ist, die senkrecht zur Lichtquellenebene angeordnet und die Lichtquellenebene in einem Durchstoßpunkt durchstößt, wobei die Lichtquelle durch die Beleuchtungsoptik nach Unendlich abgebildet ist. Die erste Einzellichtquelle weist eine erste Ausdehnung L1 entlang der ersten Achsrichtung A1 auf.

Ein Mittelpunkt einer Einzellichtquelle kann beispielsweise geometrisch als Flächenschwerpunkt einer Lichtaustrittsfläche der Einzellichtquelle definiert sein. Alternativ kann ein Mittelpunkt einer Einzellichtquelle auch optisch als der Punkt in einer Lichtaustrittsfläche der Einzellichtquelle definiert sein, an dem eine Leuchtdichte der abgegebenen Lichtstrahlung ein Maximum aufweist. Im Kontext der vorliegenden Erfindung ist eine Ausdehnung einer Einzellichtquelle in einer vorgegebenen Achsrichtung allgemein als Ausdehnung einer Lichtaustrittsfläche der Einzellichtquelle in der vorgegebenen Achsrichtung durch einen beispielsweise wie oben definierten Mittelpunkt der Einzellichtquelle definiert. Insbesondere ist die erste Ausdehnung L1 der ersten Einzellichtquelle als Ausdehnung einer Lichtaustrittsfläche der ersten Einzellichtquelle in Richtung der ersten Achsrichtung A1 durch den Mittelpunkt M1 der ersten Einzellichtquelle definiert.

Bei Einsatz eines optischen Beobachtungsgerätes, beispielsweise eines Operationsmikroskops, können unterschiedliche Beleuchtungsanforderungen während des Betriebes auftreten.

Beispielsweise bei der Ophthalmo-Kataraktchirurgie kann es notwendig sein, mehrere Eigenschaften der Beleuchtungsvorrichtung, wie z. B. die Größe der Beleuchtungsspots, die Beleuchtungswinkel und/oder die Helligkeit der Beleuchtung abhängig von der jeweiligen Operationssituation sehr schnell ändern zu können. Die Kombination mehrerer Eigenschaften einer Beleuchtungsvorrichtung stellt eine besondere Herausforderung bei den beengten Platzverhältnissen eines Operationsmikroskops dar.

Der Miniaturisierung von Beleuchtungsvorrichtungen, die hohe Lichtleistungen abgeben, sind Grenzen gesetzt. Die Lichtabstrahlung einer Lichtquelle ist abhängig von ihrer lichtemittierenden Oberfläche. Bei der Kombination von Lichtquellen müssen zudem mechanische oder elektrische Gesichtspunkte, wie mechanische Halterung oder Stromzuführung berücksichtigt werden. Auch thermische Eigenschaften begrenzen eine Miniaturisierung.

Aus der US 2010/302630 A1 ist eine Beleuchtungseinrichtung für ein Mikroskop bekannt, die eine schiefe oder eine gerade Beleuchtung ermöglicht.

Die JP 2008 139820 A offenbart eine Beleuchtungseinrichtung für ein Mikroskop mit mehreren Lichtquellen.

Die JP 2005 010296 A offenbart ein Fluoreszenzmikroskop mit einer Lichtquelle, die zwei Gruppen von LEDs unterschiedlicher Wellenlänge aufweist.

Die DE 198 56 847 A1 offenbart ein Operationsmikroskop, bei dem mindestens zwei Beleuchtungsarten des Auges ausgewählt werden können.

Aus der US 2012/057013 A1 ist eine Visualisierungsvorrichtung bekannt, bei der eine Vielzahl von elektronischen Bildern für eine schiefe Beleuchtung aus verschiedenen Richtungen berechnet wird.

Es ist daher eine Aufgabe der Erfindung, eine miniaturisierte Beleuchtungsvorrichtung für ein optisches Beobachtungsgerät bereitzustellen, mit der sehr schnell unterschiedliche Beleuchtungsvarianten bei ausreichend hoher Lichtleistung bereitstellbar sind.

Die Aufgabe wird durch eine Beleuchtungsvorrichtung mit den Merkmalen des unabhängigen Anspruchs 1 gelöst. Vorteilhafte Weiterbildungen der Erfindung sind in den Unteransprüchen beschrieben.

Erfindungsgemäß ist der Mittelpunkt M1 um einen Betrag $\Delta$ in positiver Richtung entlang der Achsrichtung A1 gegenüber dem Durchstoßpunkt der optischen Achse Z durch die Lichtquellenebene versetzt, wobei für den Versatz folgende Beziehung erfüllt ist:

$$0.2 * L1 \le \Delta \le 0.5 * L1.$$

Eine Beleuchtungseinrichtung umfasst eine Lichtquelle mit zwei Einzellichtquellen und eine Beleuchtungsoptik. Die beiden Einzellichtquellen sind in einer Lichtquellenebene, senkrecht zu einer optischen Achse Z einer Beleuchtungsoptik, angeordnet und können Licht in Richtung der optischen Achse abstrahlen. Die Lichtquelle ist durch die Beleuchtungsoptik nach Unendlich abgebildet.

Die erste Einzellichtquelle hat einen ersten Mittelpunkt M1 und die zweite Einzellichtquelle einen zweiten Mittelpunkt M2. Von dem zweiten Mittelpunkt M2 zu dem ersten Mittelpunkt M1 ist ein Vektor definiert. Die Richtung dieses Vektors definiert die erste Achsrichtung A1. Entlang der Achsrichtung A1 in Bezug auf den Durchstoßpunkt der optischen Achse durch die Lichtquellenebene kann ein Abstand zwischen der Achsrichtung A1 und dem Durchstoßpunkt berechnet werden. Dazu ist es aus der Vektorrechnung bekannt, eine Orthogonale zu der Achsrichtung A1 zu bilden, die durch den Durchstoßpunkt geht. Liegt der erste Mittelpunkt M1 auf dieser Orthogonalen, ist der Abstand entlang der Achsrichtung A1 in Bezug zum Durchstoßpunkt gleich Null.

Für den Mittelpunkt M1 ist erfindungsgemäß gefordert, dass dieser Mittelpunkt um einen Betrag Δ in positiver Achsrichtung entlang der Achsrichtung A1 gegenüber dem Durchstoßpunkt der optischen Achse Z durch die Lichtquellenebene versetzt ist. Dieser Versatz ist abhängig von der Größe oder Ausdehnung L1 der ersten Einzellichtquelle entlang der Achsrichtung. Für den Versatz ist folgende Beziehung erfüllt:

$$0.2 * L1 \leq \Delta \leq 0.5 * L1.$$

Die Lichtabstrahlung einer Lichtquelle ist abhängig von ihrer lichtemittierenden Oberfläche. Bei der Kombination von Einzellichtquellen müssen mechanische, elektrische und thermische Gesichtspunkte berücksichtigt werden.

Durch zwei Einzellichtquellen sind drei unterschiedliche Beleuchtungsvarianten sehr schnell bereitstellbar. In einer ersten Beleuchtungsvariante ist nur die erste Einzellichtquelle aktiviert. In einer zweiten Beleuchtungsvariante leuchtet nur die zweite Einzellichtquelle. Eine dritte Beleuchtungsvariante ist realisiert, wenn beide Einzellichtquellen zusammen eingeschaltet sind.

Durch die erfindungsgemäße Anordnung der ersten Einzellichtquelle unter einem Versatz ihres Mittelpunkts relativ zu dem Durstoßpunkt der optischen Achse durch die Lichtquellenebene ist es möglich, die zweite Einzellichtquelle näher an die optische Achse der Beleuchtungsoptik heranzurücken. Daraus ergeben sich insbesondere Vorteile bei einer Ausgestaltung der Beleuchtungsvorrichtung mit unabhängig voneinander schalt- und/oder regelbaren Einzellichtquellen, mit denen unterschiedliche Beleuchtungsarten für unterschiedliche Anwendungszwecke eingestellt werden können. Es hat sich gezeigt, dass die beanspruchte Beziehung für den Versatz einen besonders guten Kompromiss für eine Beleuchtungsvorrichtung zur Umschaltung zwischen einer zumindest annähernd koaxialen Beleuchtung und einer Schrägbeleuchtung eines Objekts im Objektfeld darstellt, der sich zudem durch eine besonders geringe Reflektion des Beleuchtungslichtes an den optischen Elementen im Beleuchtungsstrahlengang auszeichnet. Bei einem Versatz um den Betrag Δ ist damit eine miniaturisierte Beleuchtungsvorrichtung mit zwei Einzellichtquellen, mit ausreichend hoher Lichtleistung und hoher Beleuchtungsqualität möglich.

In einer Ausgestaltung der Erfindung ist der Mittelpunkt M1 um einen Betrag Δx in Richtung einer zweiten Achsrichtung A2, die senkrecht zur ersten Achsrichtung A1 verläuft, gegenüber dem Durchstoßpunkt der optischen Achse Z durch die Lichtquellenebene versetzt.

Durch einen Versatz der beiden Einzellichtquellen in einer zweiten Achsrichtung A2 senkrecht zur ersten Achsrichtung A1 kann eine optische Anordnung der beiden Einzellichtquellen unter Berücksichtigung mechanischer, elektrischer und thermischer Gegebenheiten noch weiter verbessert werden.

In einer Ausgestaltung der Erfindung ist die erste Einzellichtquelle in einer ersten Zeile eines Arrays aus Einzellichtquellen und die zweite Einzellichtquelle in einer zweiten Zeile des Arrays aus Einzellichtquellen angeordnet und die erste Einzellichtquelle und die zweite Einzellichtquelle sind unabhängig voneinander steuerbar.

Die Anordnung der Einzellichtlichtquellen in einem Array ermöglicht einen kompakten Aufbau der Beleuchtungslichtquelle. Durch eine voneinander unabhängige Steuerung der Einzellichtquellen lassen sich sehr schnell unterschiedliche Beleuchtungsvarianten einstellen.

In einer Ausgestaltung der Erfindung weist das Array aus Einzellichtquellen mindestens vier Einzellichtquellen auf.

Durch mindestens vier Einzellichtquellen sind mehr als drei verschiedene Beleuchtungsvarianten einstellbar.

In einer Ausgestaltung der Erfindung sind die in dem Array angeordneten Einzellichtquellen quadratisch, rechteckig oder rund ausgeführt.

Eine Fertigung eines Arrays mit Einzellichtquellen der oben genannten Form ist kostengünstig.

In einer Ausgestaltung der Erfindung ist eine Steuerungsvorrichtung vorhanden, durch die die Helligkeit jeder Einzellichtquelle durch Spannungs- und/oder Stromsteuerung oder durch eine Pulsweitenmodulation mit frei einstellbaren Pulsverhältnissen steuerbar ist.

Die Beleuchtungsvarianten sind durch das spezifische Steuern oder Regeln einzelner Einzellichtquellen an bestimmten Positionen des Arrays einstellbar. Durch das Zuschalten einer oder mehrerer Einzellichtquellen kann die Helligkeit des Beleuchtungslichtes erhöht werden. Vorteilhaft kann die Helligkeit der Einzellichtquellen zusätzlich durch eine Steuerung der Spannung und/oder des Stroms definiert werden. Um die Einzellichtquellen in einem breiten Helligkeitsbereich in sehr feinen Abstufungen einstellen zu können, kann vorteilhafte eine Steuerung durch Pulsweitenmodulation mit frei einstellbaren Pulsverhältnissen erfolgen.

Gemäß einem zweiten Aspekt der Erfindung wird ein Operationsmikroskop mit einer vorstehend beschriebenen Beleuchtungsvorrichtung bereitgestellt.

Bei der Ausgestaltung eines Operationsmikroskops mit einer Beleuchtungsvorrichtung der oben beschriebenen Art können vorteilhaft verschieden Beleuchtungsvarianten realisiert werden. Typischerweise wird das Beleuchtungslicht in einen ersten monoskopischen oder stereoskopischen Beobachtungsstrahlengang eingekoppelt. Auch die Einkopplung in einen zweiten monoskopischen oder stereoskopischen Beobachtungsstrahlengang ist vorstellbar. Durch die Anordnung der Einzellichtquellen in einem zweidimensionalen Array können durch eine selektive Steuerung der Einzellichtquellen unterschiedliche Beleuchtungswinkel erreicht werden. Durch eine koaxiale Einkopplung eines Beleuchtungsstrahlenganges in einen Beobachtungsstrahlengang kann vorteilhaft eine Rotreflex-Beleuchtung gebildet werden.

Weitere Vorteile und Merkmale der Erfindung werden in Bezug auf die nachfolgenden Zeichnungen erklärt, in welchen zeigen:

Figur 1 ein erstes Ausführungsbeispiel einer erfindungsgemäßen Beleuchtungsvorrichtung mit einem Operationsmikroskop;

Figur 2 ein Ausführungsbeispiel für eine Lichtquelleneinheit mit einem Einzellichtquellen-Array;

Figur 3 ein Einzellichtquellen-Array, dass gegenüber der optischen Achse des Beleuchtungsstrahlengangs versetzt angeordnet ist.

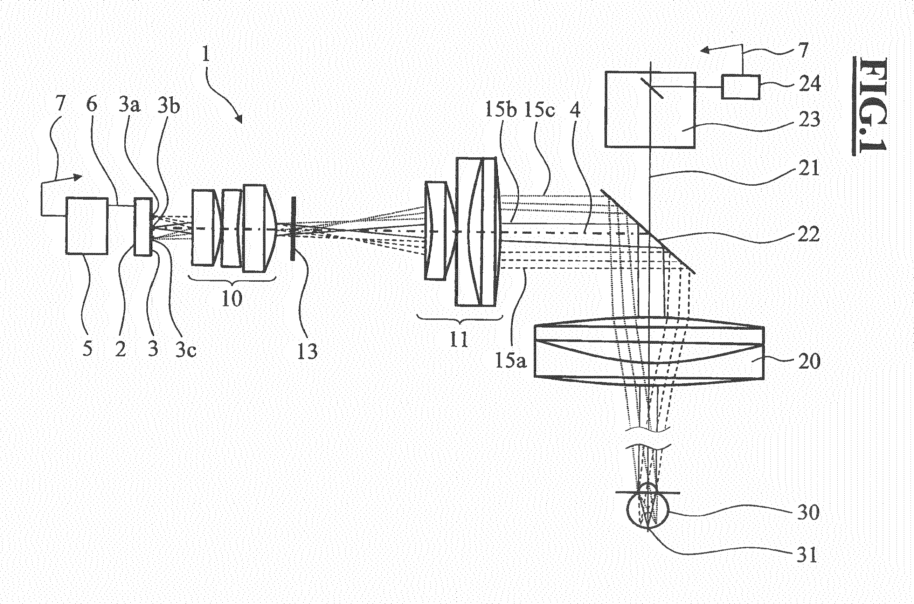

Figur 1 zeigt ein erstes Ausführungsbeispiel einer erfindungsgemäßen Beleuchtungsvorrichtung 1 mit einem Operationsmikroskop. Das Operationsmikroskop ist als Stereomikroskop ausgebildet.

Die Beleuchtungsvorrichtung 1 weist eine Lichtquelleneinheit 2, eine erste Linsengruppe 10, eine Leuchtfeldblende 13 und eine zweite Linsengruppe 11 auf, die entlang einer optischen Achse 4 angeordnet sind. Die Lichtquelleneinheit 2 umfasst ein zweidimensionales Einzellichtquellen-Array 3, welches eine erste Einzellichtquelle 3a, eine zweite Einzellichtquelle 3b und eine dritte Einzellichtquelle 3c aufweist. Das Einzellichtquellen-Array 3 umfasst weitere, nicht dargestellte Einzellichtquellen. Das Einzellichtquellen-Array 3 ist in einer ersten Ebene senkrecht zur optischen Achse 4 angeordnet. Das Zentrum der zweiten Einzellichtquelle ist um einen kleinen Betrag gegenüber der optischen Achse verschoben. Die Verschiebung ist kleiner als der Durchmesser der zweiten Einzellichtquelle 3b. Die Lichtquelleneinheit 2 ist über eine Leitung 6 mit einer Steuerungsvorrichtung 5 verbunden.

Die von dem Einzellichtquellen-Array 3 erzeugten Beleuchtungslichtstrahlenbündel werden durch die erste Linsengruppe 10, die Leuchtfeldblende 13 und die zweite Linsengruppe 11 geführt und über ein Umlenkelement 22, beispielsweise einen Strahlteiler, in einen Beobachtungsstrahlengang des Operationsmikroskops eingekoppelt. Das Operationsmikroskop weist ein Hauptobjektiv 20 und eine nur schematisch angedeutete Beobachtungsoptik 23 auf. Ein stereoskopischer Beobachtungsstrahlengang für einen ersten Beobachter ist parallel zu einer optischen Achse 21 ausgebildet. In diesem Ausführungsbeispiel ist der stereoskopische Beobachtungsstrahlengang mit einem linken und einen rechten Beobachtungsstrahlengang senkrecht zu der dargestellten Bildebene angeordnet, so dass die beiden optischen Achsen des linken und rechten Beobachtungsstrahlengangs in dieser Ansicht deckungsgleich sind.

An einen Beobachtungsstrahlengang ist über einen Strahlteiler eine Kamera 24 angekoppelt, die über eine Leitung 7 mit der Steuerungsvorrichtung 5 verbunden ist. An die Steuerungsvorrichtung kann eine nicht dargestellte Ein-Ausgabe-Einheit angeschlossen sein.

Die erste Linsengruppe 10 kann eine Einzellinse oder mehrere Linsenelemente aufweisen. Die erste Linsengruppe 10 bildet eine Kollektoroptik.

Die zweite Linsengruppe 11 bildet zusammen mit dem Hauptobjektiv 20 eine Kondensor-Linsengruppe. Die zweite Linsengruppe 11 kann eine Einzellinse oder eine Anzahl von Linsenelementen umfassen. Das Beleuchtungslicht ist unterhalb des Hauptobjektives 20 in einem parallelen Strahlenbündel geführt und wird nach Unendlich abgebildet. Das Beleuchtungslicht trifft auf ein zu beobachtendes Objekt, ein Auge 30. Im Auge 30 wird das Lichtquellenbild der Einzellichtquellen auf einem Fundus 31 abgebildet.

Von der zweiten Einzellichtquelle 3b verläuft ein zweites Beleuchtungsstrahlenbündel 15b parallel zu der optischen Achse 4 und wird koaxial in den linken Beobachtungsstrahlengang eingekoppelt. Auf dem Fundus 31 des Auges 30 erzeugt das Licht der zweiten Einzellichtquelle 3b einen Beleuchtungsspot. Das vom Fundus 31 zurückgestreute Licht kann ein Beobachter beim Blick durch das Operationsmikroskop als Rotreflex wahrnehmen.

Wird der linke Beobachtungsstrahlengang auf den Fundus projiziert, bildet dieser einen in etwa runden Querschnitt auf dem Fundus. Der von der zweiten Einzellichtquelle 3b erzeugte Beleuchtungsspot liegt innerhalb dieses Querschnitts.

Ein von der ersten Einzellichtquelle 3a verlaufendes erstes Beleuchtungsstrahlenbündel 15a wird unter einem kleinen Winkel von ca. -2° bezüglich der optischen Achse eines Beobachtungsstrahlengangs zu dem Auge 30 geführt und bildet eine -2°-Beleuchtung.

Ein von der dritten Einzellichtquelle 3c verlaufendes drittes Beleuchtungsstrahlenbündel 15c wird dagegen unter einem kleinen Winkel von ca. 2° bezüglich der optischen Achse eines Beobachtungsstrahlengangs zu dem Auge 30 geführt und bildet eine 2°-Beleuchtung bezüglich der gegenüberliegenden Seite der optischen Achse.

Die oben beschriebenen Ausführungen gelten sowohl für einen linken als auch einen rechten Beobachtungsstrahlengang. Das Einzellichtquellen-Array 3 weist für den rechten Beobachtungsstrahlengang drei weitere, in der Bildebene hinter den Einzellichtquellen 3a, 3b, 3c liegende Einzellichtquellen auf.

Die Lichtquelleneinheit 2 umfasst das Einzellichtquellen-Array 3, wobei jede Einzellichtquelle aus einer LED oder einer OLED gebildet ist. Es ist auch vorstellbar, dass die Einzellichtquellen Lichtleitfasern umfassen und die Einzellichtquellen aus den Faserenden der Lichtleitfasern gebildet sind. Damit ist eine sehr kompakte Bauform der Einzellichtquellen erreichbar. Bei der Ausführung der Einzellichtquellen als LED's oder OLED's können die Einzellichtquellen sehr schnell und einfach elektrisch gesteuert werden. Bei der Ausgestaltung als Austrittsende von Lichtleitfasern wird in der Ebene des zweidimensionalen Arrays keine Wärme erzeugt und es kann an dieser Stelle auf wärmeableitende Maßnahmen verzichtet werden. Das Einzellichtquellen-Array 3 kann auch eine Kombination aus LED's, OLED's und Glasfasern umfassen. Es ist auch vorstellbar, dass die Einzellichtquellen durch Laser oder angeregte Konverter gebildet sind. Die Einzellichtquellen können eine quadratische, rechteckige oder runde Abstrahlfläche haben.

Die Steuerungsvorrichtung 5 ist dazu ausgebildet, die erste Einzellichtquellen 3a, die zweite Einzellichtquelle 3b, die dritte Einzellichtquelle 3c und alle weitere, nicht dargestellte Einzellichtquellen des Einzellichtquellen-Arrays individuell ein- und auszuschalten. Des Weiteren kann die Helligkeit aller Einzellichtquellen durch eine Steuerung der Spannung oder des Stroms der Einzellichtquellen eingestellt werden. Alternativ ist die Helligkeit durch eine Pulsweitenmodulation mit frei einstellbaren Pulsverhältnissen steuerbar. Eine elektronische Helligkeitseinstellung der Einzellichtquellen hat den Vorteil, dass keine beweglichen Teile, wie beispielsweise Filter in den Beleuchtungsstrahlengang eingebracht werden müssen.

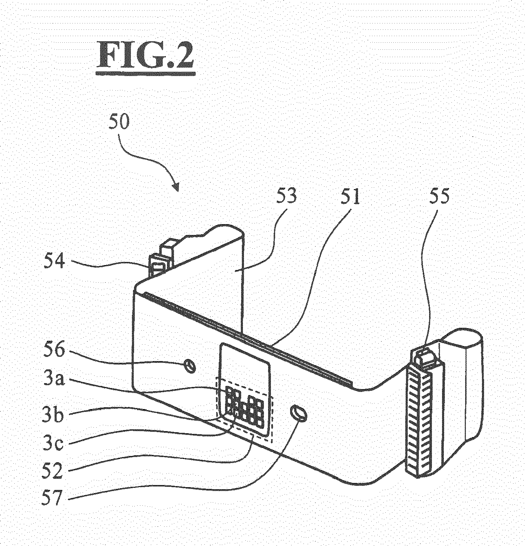

Figur 2 zeigt ein Ausführungsbeispiel einer Lichtquelleneinheit 50 mit einem Einzellichtquellen-Array. Das Einzellichtquellen-Array ist als LED-Matrix 52 mit vierzehn LED-Einzellichtquellen ausgebildet. Die LED-Einzellichtquellen sind als SMD-LED's auf einer Platine 51 angeordnet und können jeweils einzeln angesteuert werden. Die Anoden aller Einzellichtquellen können verbunden sein, während die Emitter jeweils über einzelne Leitung zu der Steuerungsvorrichtung 5 geführt sind. Es ist aber auch vorstellbar, dass die LED-Einzellichtquellen elektrisch in einer Gitteranordnung angeschlossen sind und über eine Muliplex-Elektronik angesteuert werden. Die Multiplex-Elektronik kann auf der Platine 51 angeordnet sein oder in der Steuerungseinheit 5 integriert sein. Die Platine 51 weist eine erste Aussparung 56 und eine zweite Aussparung 57 für jeweils ein mechanisches Befestigungselement auf. Die Platine ist mit einem Flachbandkabel 53 verbunden. Das Flachbandkabel weist einen ersten Steckverbinder 54 und einen zweiten Steckverbinder 55 auf, mit der die LED-Matrix 52 an die Steuerungsvorrichtung 5 angeschlossen werden kann.

Drei in einer Spalte der LED-Matrix 52 angeordneten LED-Einzellichtquellen können die in Figur 1 dargestellte erste Einzellichtquelle 3a, zweite Einzellichtquelle 3b und dritte Einzellichtquelle 3c bilden.

In dem Einzellichtquellen-Array müssen nicht alle Positionen durch LED-Einzellichtquellen besetzt sein. Die Lichtquelleneinheit 50 kann in diesem Fall günstiger produziert werden. Eine mögliche Wärmeentwicklung der Beleuchtungseinheit ist geringer. Es ist zusätzlicher Platz für Leitungen oder elektronische Bauelemente verfügbar.

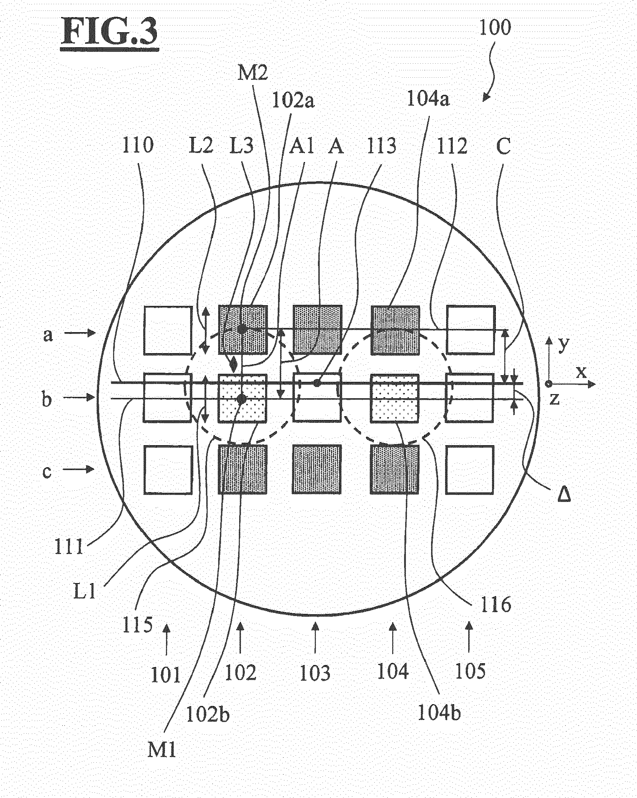

Figur 3 zeigt ein Einzellichtquellen-Array 100, das gegenüber einer optischen Achse des Beleuchtungsstrahlengangs versetzt angeordnet ist.

In dem Ausführungsbeispiel sind die Einzellichtquellen als quadratische LED's ausgeführt. Das Einzellichtquellen-Array 100 umfasst 15 Einzellichtquellen. Die Einzellichtquellen sind in einer Lichtquellenebene in dem Array angeordnet. Die Lichtquellenebene ist in einer X/Y-Ebene aufgespannt. Eine optische Achse der Beleuchtungsoptik verläuft senkrecht zu der Lichtquellenebene parallel zu einer Z-Achse und durchstößt die Lichtquellenebene in einem Durchstoßpunkt 113.

Das Array umfasst drei Zeilen und fünf Spalten. Die Zeilen sind mit Kleinbuchstaben a, b, c und die Spalten mit Ziffern 101, 102, 103, 104, 105 bezeichnet. Durch die Kombination der Ziffer der jeweiligen Spalte und des Buchstabens der jeweiligen Zeile kann die Position einer Einzellichtquelle in dem Einzellichtquellen-Array eindeutig definiert werden.

Die Mittelpunkte der Einzellichtquellen der ersten Zeile a liegen auf einer ersten Geraden 112. Die Mittelpunkte der Einzellichtquellen der zweiten Zeile b liegen auf einer zweiten Geraden 111. Die erste Gerade 112 und die zweite Gerade 111 verlaufen parallel in einem ersten Abstand A zueinander. Der erste Abstand A beträgt beispielsweise 1,6 mm.

Eine erste Einzellichtquelle an der Position 102b hat einen ersten Mittelpunkt M1. Eine zweite Einzellichtquelle an der Position 102a weist einen zweiten Mittelpunkt M2 auf. Von dem zweiten Mittelpunkt M2 zu dem ersten Mittelpunkt M1 ist eine erste Achsrichtung A1 definiert. In dem Ausführungsbeispiel ist die erste Achsrichtung A1 in entgegengesetzter Richtung zur Y-Achse angeordnet.

Die Einzellichtquellen in der zweiten Zeile b weisen entlang der ersten Achsrichtung A1 eine erste Ausdehnungen L1 auf die in diesem Ausführungsbeispiel 1 mm betragen. Eine zweite Ausdehnung L2 der Einzellichtquellen der ersten Zeile a entlang der ersten Achsrichtung A1 beträgt in diesem Ausführungsbeispiel ebenfalls 1 mm. Die erste Ausdehnung L1 und die zweite Ausdehnung L2 können unterschiedlich oder gleich groß sein. Bei einer runden Ausführung der Einzellichtquellen kann die erste Ausdehnung L1 mit einem ersten Durchmesser der Einzellichtquellen in der zweiten Zeile b und die zweite Ausdehnung L2 mit einem zweiten Durchmesser der Einzellichtquellen in der ersten Zeile a gleichgesetzt werden.

Eine dritte Gerade 110 verläuft durch den Durchstoßpunkt 113 der optische Achse durch Lichtquellenebene in X-Richtung parallel zu den ersten beiden Geraden. Die dritte Gerade 110 ist in diesem Ausführungsbeispiel orthogonal zu der ersten Achsrichtung A1 angeordnet. Der erste Mittelpunkt M1 ist somit um einen Betrag $\Delta$ in positiver Richtung entlang der Achsrichtung A1 gegenüber dem Durchstoßpunkt 113 versetzt.

Der Betrag $\Delta$ ist kleiner als die erste Ausdehnung L1. Für den Betrag $\Delta$ ist dabei folgende Beziehung erfüllt: $0.2 * L1 \leq \Delta \leq 0.5 * L1$.

Der Betrag $\Delta$ liegt in diesem Ausführungsbeispiel zwischen 0.2 mm und 0.5 mm. In dem Ausführungsbeispiel gemäß Figur 3 beträgt der Betrag Δ = 0.3 mm.

Die erste Gerade 112 und die dritte Gerade 110 verlaufen in einem zweiten Abstand C zueinander. Die zweite Gerade 111 ist bezüglich der dritten Geraden 110 um einen Betrag Δ versetzt. Damit gilt der Versatz um den Betrag Δ für alle Einzellichtquellen, die in der zweiten Reihe b angeordnet sind.

Zwischen den Einzellichtquellen befindet sich ein Bereich, der kein Licht abstrahlt. Dieser Bereich hat eine Breite L3 parallel zur Y-Achse und kann beispielsweise einen Wert von 0.6 mm aufweisen.

Gemäß Figur 1 wird eine Einzellichtquelle auf dem Fundus 31 eines zu beobachtenden Auges 30 abgebildet. Es sind zwei Einzellichtquellen an den Positionen 102b und 104b eingeschaltet.

Das Licht der Einzellichtquellen wird, wie in Figur 1 dargestellt, durch die Beleuchtungsoptik und das Hauptobjektiv 20 auf dem Fundus 31 des zu beobachtenden Auges 30 abgebildet. Die Abbildung einer Einzellichtquelle auf dem Fundus 31 wird als Beleuchtungsspot bezeichnet. Die Einzellichtquelle an der Position 102b wird koaxial in einen linken Beobachtungsstrahlengang eingekoppelt und bildet auf dem Fundus einen ersten Beleuchtungsspot. Die Einzellichtquelle an der Position 104b wird koaxial in den rechten Beobachtungsstrahlengang eingekoppelt und bildet auf dem Fundus einen zweiten Beleuchtungsspot.

Die Beobachtungseinrichtung ist gemäß Figur 1 auf die vordere Linsenkammer des Auges 30 fokussiert. Die auf dem Fundus projizierten Abbildungen des linken und rechten Beobachtungsstrahlenganges bewirken dort jeweils einen kreisförmigen linken Beobachtungsspot und einen rechten Beobachtungsspot. Die X/Y-Ebene der Lichtquellenebene bildet einen konjugierten Ort für die Fundus-Abbildung. Der linke Beobachtungsspot ist in der X/Y-Ebene als ein linker Kreis 115 und der rechte Beobachtungsspot als ein rechter Kreis 116 dargestellt.

Die Einzellichtquellen sind gegenüber der dritten Gerade 110 um den Betrag Δ versetzt. Trotzdem befindet sich die Einzellichtquelle an der Position 102b innerhalb des linken

Kreises 115. Dass bedeutet, dass trotz der Verschiebung oder Dezentrierung der Einzellichtquelle 102b um den Betrag Δ eine zur linken Achse des Beobachtungsstrahlengangs achsnahe Beleuchtung erreichbar ist. Ebenso ist für eine Einzellichtquelle 104b eine achsnahe Beleuchtung für den rechten Beobachtungsstrahlengang erreichbar, da der Beleuchtungsspot der Einzellichtquelle 104b innerhalb des rechten Kreises 116 liegt. Die achsnahe Beleuchtung bewirkt eine Rotreflex-Beleuchtung mit sehr gutem Kontrast und sehr guter Homogenität. Damit ist eine erste Beleuchtungsvariante realisiert, die eine Rotreflex-Beleuchtung durch Aktivierung der Einzellichtquellen an den Positionen 102b und 104b bewirkt. Die erste Beleuchtungsvariante hat somit die Wirkung einer sehr guten Stereokoaxialbeleuchtung.

Eine zweite Beleuchtungsvariante ist erreichbar durch die Aktivierung der beiden Einzellichtquellen an den Positionen 102a und 104a. Die Einzellichtquelle an der Position 102a ist in den linken Beobachtungsstrahlengang eingekoppelt und die Einzellichtquelle an der Position 104a ist in den rechten Beobachtungsstrahlengang eingekoppelt. Die jeweiligen Fundusspots sind derart ausgebildet, dass diese teilweise innerhalb und teilweise außerhalb der beiden Beobachtungsspots liegen. In der zur Fundusebene konjugierten X/Y-Ebene ist dies dadurch erkennbar, dass der linke Kreises 115 durch die Einzellichtquelle an der Position 102a hindurch geht. Dies gilt ebenso für den rechten Kreis 116 und die Einzellichtquelle an der Position 104a.

Die zweite Beleuchtungsvariante stellt eine Schrägbeleuchtung dar, die auch als 2°-Beleuchtung bezeichnet wird. Die Schrägbeleuchtung bewirkt eine große Tiefenwirkung bei akzeptabler Homogenität und gutem Kontrast.

Einer dritten Beleuchtungsvariante stellte eine Kombination der ersten Beleuchtungsvariante und der zweiten Beleuchtung dar. Die Einzellichtquellen an den Positionen 102a, 102b, 104a, 104b sind aktiviert. Das Ergebnis ist ein helles Bild bei mittlerer Tiefenwirkung aber etwas geringerem Kontrast.

Auf diese Weise kann die für die jeweilige Beobachtungssituation optimierte Beleuchtungsvariante eingestellt werden. Der Beobachter kann zwischen einer Koaxialbeleuchtung oder einer Schrägbeleuchtung wechseln oder beide Beleuchtungsarten kombinieren. Die Größe der Fundusspots, der Beleuchtungswinkel und die Helligkeit kann dabei an die jeweilige Situation optimal angepasst werden. Die Aktivierung zusätzlicher Einzellichtquellen bewirkt eine Aufhellung des Bildes.

Durch die Dezentrierung der Einzellichtquellen um den Betrag Δ in Bezug auf die dritte Gerade 110 können die Eigenschaften einer guten Koaxialbeleuchtung oder Rotreflex-Beleuchtung mit den Vorteilen einer Schrägbeleuchtung kombiniert werden. Es sind mindestens drei unterschiedliche Beleuchtungsvarianten einstellbar. Somit können sehr kleine lichtstarke Einzellichtquellen, beispielsweise LED's, bei sehr beengten Platzverhältnissen in ein Operationsmikroskop integriert werden. Bei einer Miniaturisierung der Beleuchtungslichtquelle ist eine qualitativ sehr hochwertige Beleuchtungsvorrichtung bereitstellbar, mit der sehr schnell unterschiedliche Beleuchtungsvarianten bei ausreichend hoher Lichtleistung einstellbar sind.

## Patentansprüche

1. Beleuchtungsvorrichtung (1) für ein optisches Beobachtungsgerät, aufweisend

   - eine Lichtquelle (3, 52, 100), umfassend eine erste Einzellichtquelle (3b, 102b) und eine zweite Einzellichtquelle (3a, 102a), die in einer Lichtquellenebene angeordnet sind, wobei die erste Einzellichtquelle (3b, 102b) einen ersten Mittelpunkt M1 und die zweite Einzellichtquelle einen zweiten Mittelpunkt M2 aufweist und wobei eine erste Achsrichtung A1 durch einen Vektor von dem zweiten Mittelpunkt M2 zu dem ersten Mittelpunkt M1 definiert ist;

- eine Beleuchtungsoptik (10), durch die eine optische Achse Z definiert ist, die senkrecht zur Lichtquellenebene angeordnet ist und die Lichtquellenebene in einem Durchstoßpunkt (113) durchstößt, wobei die Lichtquelle (3, 52, 100) durch die Beleuchtungsoptik nach Unendlich abgebildet ist,

- wobei die erste Einzellichtquelle (3b, 102b) eine erste Ausdehnung L1 entlang der ersten Achsrichtung A1 aufweist,

wobei der Mittelpunkt M1 um einen Betrag $\Delta$ in positiver Richtung entlang der Achsrichtung A1 gegenüber dem Durchstoßpunkt (113) der optischen Achse Z durch die Lichtquellenebene versetzt ist, wobei für den Versatz folgende Beziehung erfüllt ist:

$$0.2 * L1 \leq \Delta \leq 0.5 * L1.$$

2. Beleuchtungsvorrichtung nach Anspruch 1, wobei der Mittelpunkt M1 um einen Betrag $\Delta x$ in Richtung einer zweiten Achsrichtung A2, die senkrecht zur ersten Achsrichtung A1 verläuft, gegenüber dem Durchstoßpunkt (113) der optischen Achse Z durch die Lichtquellenebene versetzt ist.

3. Beleuchtungsvorrichtung nach Anspruch 1 oder 2, wobei die erste Einzellichtquelle (3b, 102b) in einer ersten Zeile eines Arrays aus Einzellichtquellen und die zweite Einzellichtquelle (3a, 102a) in einer zweiten Zeile des Arrays aus Einzellichtquellen angeordnet ist und dass die erste Einzellichtquelle (3b, 102b) und die zweite Einzellichtquelle (3a, 102a) unabhängig voneinander steuerbar sind.

4. Beleuchtungsvorrichtung nach Anspruch 3, wobei das Array aus Einzellichtquellen mindestens vier Einzellichtquellen aufweist.

5. Beleuchtungsvorrichtung nach einem Ansprüche 3 oder 4, wobei die in dem Array angeordneten Einzellichtquellen quadratisch, rechteckig oder rund ausgeführt sind.

6. Beleuchtungsvorrichtung nach einem der bisherigen Ansprüche, wobei eine Steuerungsvorrichtung (5) vorhanden ist, durch die die Helligkeit jeder Einzellichtquelle durch Spannungs- und/oder Stromsteuerung oder durch eine Pulsweitenmodulation mit frei einstellbaren Pulsverhältnissen steuerbar ist.

7. Operationsmikroskop mit einer Beleuchtungsvorrichtung nach einem der Ansprüche 1 bis 6.

**Claims**

1. Illumination apparatus (1) for an optical observation device, having

- a light source (3, 52, 100), comprising a first individual light source (3b, 102b) and a second individual light source (3a, 102a), which are arranged in a light source plane, wherein the first individual light source (3b, 102b) has a first midpoint M1 and the second individual light source has a second midpoint M2 and wherein a first axis direction A1 is defined by a vector from the second midpoint M2 to the first midpoint M1;

- an illumination optical unit (10), through which an optical axis Z is defined that is arranged perpendicular to the light source plane and intersects the light source plane at an intersection point (113), wherein the light source (3, 52, 100) is imaged to infinity by the illumination optical unit,

- wherein the first individual light source (3b, 102b) has a first extent L1 along the first axis direction A1, wherein the midpoint M1 is offset by an absolute value $\Delta$ in a positive direction along the axis direction A1 with respect to the intersection point (113) of the optical axis Z with the light source plane, wherein the following relationship is satisfied for the offset:

$$0.2*L1 \leq \Delta \leq 0.5*L1.$$

2. Illumination apparatus according to Claim 1, wherein the midpoint M1 is offset by an absolute value $\Delta x$ in the direction of a second axis direction A2, which is perpendicular to the first axis direction A1, with respect to the intersection point (113) of the optical axis Z with the light source plane.

3. Illumination apparatus according to Claim 1 or 2, wherein the first individual light source (3b, 102b) is arranged in a first row of an array of individual light sources and the second individual light source (3a, 102a) is arranged in a second row of the array of individual light sources, and that the first individual light source (3b, 102b) and the second individual light source (3a, 102a) are controllable independently of each other.

4. Illumination apparatus according to Claim 3, wherein the array of individual light sources has at least four individual light sources.

5. Illumination apparatus according to either of Claims 3 and 4,
   wherein the individual light sources arranged in the array have a square, rectangular or round design.

6. Illumination apparatus according to any of the preceding claims,
   wherein a control apparatus (5) is present, by means of which the brightness of each individual light source is controllable by voltage and/or current control or by pulse width modulation with freely settable pulse ratios.

7. Surgical microscope having an illumination apparatus according to any of Claims 1 to 6.

**Revendications**

1. Dispositif d'éclairage (1) destiné à un appareil d'observation optique, ledit dispositif d'éclairage comportant

   - une source de lumière (3, 52, 100) comprenant une première source de lumière individuelle (3b, 102b) et une deuxième source de lumière individuelle (3a, 102a), lesquelles sont disposées dans un plan de sources de lumière, la première source de lumière individuelle (3b, 102b) comportant un premier point central M1 et la deuxième source de lumière individuelle comportant un deuxième point central M2 et une première direction axiale A1 étant définie par un vecteur allant du deuxième point central M2 au premier point central M1 ;
   - une optique d'éclairage (10) qui définit un axe optique Z qui est disposé perpendiculairement au plan de sources de lumière et qui traverse le plan de sources de lumière en un point de traversée (113), la source de lumière (3, 52, 100) étant reproduite à l'infini par l'optique d'éclairage,
   - la première source de lumière individuelle (3b, 102b) comportant une première extension L1 le long de la première direction axiale A1,
   le point central M1 étant décalé d'une valeur $\Delta$ dans la direction positive le long de la direction axiale A1 par rapport au point de traversée (113) de l'axe optique Z à travers le plan de sources de lumière, le décalage satisfaisant à la relation suivante :

   $$0,2*L1 \leq \Delta \leq 0,5*L1.$$

2. Dispositif d'éclairage selon la revendication 1, le point central M1 étant décalé d'une valeur $\Delta x$ dans la direction d'une deuxième direction axiale A2, qui s'étend perpendiculairement à la première direction axiale A1, par rapport au point de traversée (113) de l'axe optique Z à travers le plan de sources de lumière.

3. Dispositif d'éclairage selon la revendication 1 ou 2, la première source de lumière individuelle (3b, 102b) étant disposée dans une première rangée d'un réseau de sources de lumière individuelles et la deuxième source de lumière individuelle (3a, 102a) étant disposée dans une deuxième rangée du réseau de sources de lumière individuelles et la première source de lumière individuelle (3b, 102b) et la deuxième source de lumière individuelle (3a, 102a) pouvant être commandées indépendamment.

4. Dispositif d'éclairage selon la revendication 3, le réseau de sources de lumière individuelles comportant au moins quatre sources de lumière individuelles.

5. Dispositif d'éclairage selon l'une des revendications 3 ou 4, les sources de lumière individuelles, disposées dans le réseau, représentant un carré, un rectangle ou un rond.

6. Dispositif d'éclairage selon l'une des revendications précédentes, un dispositif de commande (5) étant prévu qui peut commander la luminosité de chaque source de lumière individuelle en commandant une tension et/ou un courant ou en modulant la largeur d'impulsions avec des rapports d'impulsion réglables librement.

7. Microscope chirurgical comprenant un dispositif d'éclairage selon l'une des revendications 1 à 6.

# FIG.1

# FIG.2

FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010302630 A1
- JP 2008139820 A
- JP 2005010296 A
- DE 19856847 A1
- US 2012057013 A1